# EUROPÄISCHE PATENTANMELDUNG

(11) **EP 4 300 322 A1**
(43) Veröffentlichungstag der Anmeldung: **03.01.2024**
(21) Anmeldenummer: 22182015.2
(22) Anmeldetag: 29.06.2022
(51) Int. Cl.: G06F 16/27, G06F 16/901

(54) **VERFAHREN ZUM BEREITSTELLEN VON DATEN EINES AUTOMATISIERUNGSSYSTEMS, SUCHVERFAHREN ZUR ERMITTLUNG VON DATEN EINES AUTOMATISIERUNGSSYSTEMS, COMPUTERPROGRAMM, COMPUTERLESBARES MEDIUM UND VORRICHTUNG ZUR DATENVERARBEITUNG**

(71) Anmelder: Siemens Aktiengesellschaft, 80333 München (DE)
(72) Erfinder: Eckl, Roland, 91301 Forchheim (DE); Montag, Axel, 76889 Kapsweyer (DE)
(74) Vertreter: Siemens Patent Attorneys

(57) **Zusammenfassung**

Die Erfindung betrifft ein Verfahren zum Bereitstellen von Daten eines Automatisierungssystems (2) für Suchabfragen, bei dem
S1)
ein die Daten des Automatisierungssystems (2) umfassendes OPC UA Datenmodell (1) bereitgestellt wird,
S2)
ein durch Transformation des OPC UA Datenmodells (1) erhaltenes und den Adressraum (4) des OPC UA Datenmodells (1) repräsentierendes zusätzliches Datenmodell, Schattenmodell (8), bereitgestellt wird, wobei das Schattenmodell (8) auf einer Graphdatenbank, insbesondere einer RDF- oder OWL- oder Labeled-Property-Graphdatenbank, basiert oder durch eine solche gegeben ist, und wobei auf das Schattenmodell (8) von externen Applikationen nur lesend zugegriffen werden kann,
S3)
das Schattenmodell (8) im Falle von in dem OPC UA Datenmodell (1) durchgeführten Änderungen automatisch nachgeführt wird, so dass das Schattenmodell (8) bei Änderungen des OPC UA Datenmodells (1) mit dem OPC UA Datenmodell (1) konsistent bleibt.

Darüber hinaus betrifft die Erfindung ein Suchverfahren zur Ermittlung von Daten eines Automatisierungssystems, ein Computerprogramm, ein computerlesbares Medium sowie eine Vorrichtung zur Datenverarbeitung.

## Beschreibung

Die Erfindung betrifft ein Verfahren zum Bereitstellen von Daten eines Automatisierungssystems für Suchabfragen. Darüber hinaus betrifft die Erfindung ein Suchverfahren zur Ermittlung von Daten eines Automatisierungssystems, ein Computerprogramm, ein computerlesbares Medium sowie eine Vorrichtung zur Datenverarbeitung.

Die Komponenten industrieller Automatisierungssysteme wurden in der Vergangenheit üblicherweise durch spezialisierte Netzwerke miteinander verbunden, die industrielle Standardprotokolle für den Zugriff und den Datenaustausch verwendet haben.

Mit OPC UA (Open Platform Communication Unified Architecture) ist ein industrielles Standardprotokoll der OPC Foundation für die herstellerunabhängige Kommunikation zum Austausch von industriellen Daten, insbesondere in der Prozessautomatisierung, geschaffen worden.

OPC UA Server halten das bereitgestellte Informationsmodell als internen Zustand ("state") zur Laufzeit für OPC UA Konsumenten ("OPC UA Clients") bereit, um semantische Informationen über die bereitgestellten Daten zu liefern. Im Grundsatz repräsentiert dieses Modell einen Graphen von Knoten (englisch "Nodes"), die durch Referenzen miteinander verknüpft sind. Dieser Graph ist der Adressraum eines OPC-Servers. Gleichzeitig werden aktuelle Prozessdaten von Automatisierungsgeräten als Teil dieses Modells in Variablen zum Zugriff bereitgestellt.

Der OPC UA Standard ermöglicht hohe Freiheitsgrade für eine standardisierte Repräsentation von (Meta-)Daten eines Automatisierungssystems mit seinen Geräten. Gleichzeitig führt dies auch zu einer hohen Komplexität der Informationsmodelle und - gerade bei größeren Anlagen - zu einer großen Menge an Objekten im Modell.

Das Finden von Informationen im Objektmodell (z.B. Objektinstanzen oder Variablen und deren Werte) nach bestimmten Kriterien ist deswegen eine Aufgabe, die einen hohen Aufwand bergen kann. Insbesondere an Zeit, die für die Entwicklungsaufgabe aufgewendet werden muss und Rechenzeit, die zur Laufzeit benötigt wird.

Rein beispielhaft sei ein OPC UA Server genannt, der in seinem Objektmodell auch die OPC UA Companion Specification "Robotics" hält. Der Server müsste bei einer Anfrage nach allen ihm bekannten Roboterinstanzen alle Knoten im Adressraum finden und zurückliefern, deren Atribut "NoteClass" den Wert "Object" hat und eine Referenz "HasTypeDefinition" besitzen, deren Attribut "DisplayName" den Wert "MotionDeviceSystemType" hat. Diese noch vergleichsweise einfache Aufgabe kann, z.B. bezogen auf die Anzahl der beteiligten Suchparameter, deutlich aufwendiger werden, wenn man beispielsweise nach der Temperatur eines Motors in der Menge der Antriebe eines bestimmten Roboters suchen will.

Der OPC UA Standard adressiert diese Problematik zwar, allerdings sind die dort definierten Lösungen des gefilterten Durchsuchens des Adressraums ("Browsing") und komplexer Abfragen ("OPC Queries") entweder mit gravierenden Nachteilen behaftet oder gar, wie im Fall von OPC Queries, ohne öffentlich bekannte Implementierung.

Üblicherweise durchsuchen Clients den OPC Adressraum durch Navigieren der Knoten ("Browsing"). Dies geschieht, indem ausgehend von einem Knoten im Adressraum über dessen Referenzen andere Knoten gefunden werden, die mit diesem Knoten in semantischer Verbindung stehen.

Bei dem Browsen können zwar prinzipiell Filter verwendet werden, konkret sogenannte "ContentFilter", in denen beliebig viele Suchparameter mit logischen Operanden verknüpft werden können. Diese Filter wirken allerdings immer auf das Ergebnis einer Reihe von wiederkehrenden Browsing-Operationen, also iterativ innerhalb eines durch den Client zu implementierenden Algorithmus. Insbesondere ist es beim Browsing nicht möglich, wie bei einer Datenbankabfrage, die gesamte Menge der Knoten durch Übergabe einer einzigen deklarativen Suchanweisung, eines sogenannten "Query Statements", an eine bereits implementierte und dafür optimierte Abfragelogik ("Query Engine") zu durchsuchen und eine komplette Ergebnismenge ("Result Set") zurückgeliefert zu bekommen.

Wie angemerkt existieren auch OPC Query Services. Diese ermöglichen es Clients, über Anfragen gegen eine vom Server implementierte Abfragelogik auf dessen Datenhaltung zuzugreifen und ein den Abfragekriterien entsprechendes "Result Set" zurückzubekommen. Dabei ist es auch möglich, "Queries" auf Teile des Adressraums anzuwenden, die als "Views" bezeichnet werden. Hier besteht jedoch das Problem, dass es bisher für diese Reihe von Basisservices ("Service Set") keine öffentlich bekannte Implementierung gibt. Dies, obwohl sie bereits seit längerem Teil des Standards sind und in einem eigenen Anhang in Part 4 der Spezifikation ausführlich erläutert werden (vgl. die OPC UA Specification unter https://reference.opcfoundation.org/, insbesondere OPC 10000-4: OPC Unified Architecture, Part 4: Services, Release 1.04, 2017-11-22, https://reference.opcfoundation.org/v104/Core/docs/Part4/ sowie zum Adressraum OPC 10000-3: OPC Unified Architecture, Part 3: Adress Space Model, Release 1.04 2017-11-22, https://reference.opcfoundation.org/v104/Core/docs/Part3/ ).

Weiterhin basieren OPC UA Queries analog zum gesamten OPC Standard auf Aufrufparametern in Methodenaufrufen und nicht auf einer deklarativen Abfragesprache. Gerade deklarative Abfragesprachen bieten jedoch den großen Vorteil, dass sie für Menschen intuitiver und prägnanter und damit einfacher erscheinen.

Das Auffinden von Informationen nach bestimmten Kriterien im Adressraum eines OPC UA Servers durch deklarative Abfragen ist ein Problem, das bisher nicht zufriedenstellend gelöst werden konnte.

Aus der WO 2020/104019 A1 geht ein Verfahren zur Transformation eines OPC UA Datenmodells in eine Zielontologie hervor. Die Ontologie kann dabei durch eine semantische Ontologiesprache, wie RDF oder OWL, strukturiert sein. Die Abkürzung RDF steht für Resource Description Framework und OWL für Web Ontology Language, welche auf der Syntax von RDF basiert, aber eine Obermenge mit erweiterten Ausdrucksmöglichkeiten darstellt. In der WO 2020/104019 A1 ist somit eine Transformation eines OPC UA Datenmodells in eine RDF-basierte Zielontologie offenbart. Die Transformation kann insbesondere zu Validierungszwecken erfolgen, da es dann möglich ist, die RDF-basierte Zielontologie mit Standard-Ontologie-Tools zu validieren. Ferner wird durch das vorgesehene Mapping zur Erzeugung einer Ontologie mit RDF-Tripeln, die von einer SPARQL-Engine benötigt werden, die Abfrage von OPC-Datenmodellen möglich.

Ausgehend von dem Stand der Technik ist es eine Aufgabe der vorliegenden Erfindung, eine Möglichkeit zu schaffen, in einem OPC UA Datenmodell gehaltene Daten nach bestimmten Kriterien durch deklarative Abfragen besonders zuverlässig und mit vergleichsweise geringem Aufwand ermitteln zu können.

Diese Aufgabe wird gelöst durch den Zugriff auf ein Informationsmodell (Datenmodell) und auf Daten, insbesondere in einer industriellen Automatisierungsanordnung, mittels eines Verfahrens zum Bereitstellen von Daten eines Automatisierungssystems für Suchabfragen, bei dem
- S1): ein die Daten des Automatisierungssystems umfassendes OPC UA Datenmodell bereitgestellt wird,
- S2): ein durch Transformation des OPC UA Datenmodells erhaltenes und den Adressraum des OPC UA Datenmodells repräsentierendes zusätzliches Datenmodell, Schattenmodell, bereitgestellt wird, wobei das Schattenmodell auf einer Graphdatenbank, insbesondere einer RDF- oder OWL- oder Labeled-Property-Graphdatenbank, basiert oder durch eine solche gegeben ist, und wobei auf das Schattenmodell von externen Applikationen nur lesend zugegriffen werden kann,
- S3): das Schattenmodell im Falle von in dem OPC UA Datenmodell durchgeführten Änderungen automatisch nachgeführt wird, so dass das Schattenmodell bei Änderungen des OPC UA Datenmodells mit dem OPC UA Datenmodell konsistent bleibt.

Durch den Zugriff auf das Informationsmodell ist es dann der externen Applikation, also beispielsweise einer anderen industriellen Automatisierungskomponente, möglich, das Datenmodell gezielte Suchanfragen einzusetzen und so schnell und einfach benötigte Daten, beispielsweise Prozessdaten einer Automatisierungseinrichtung (z.B. PLC - Speicherprogrammierbare Steuerung), zuzugreifen. Somit können beispielsweise externe Anwendungen auf die Daten - beispielsweise ein industrielles Prozessabbild - zugreifen und als Resultat von eigenen Berechnungen mit diesen Daten geänderte Daten, beispielsweise Steuerungs- oder Aktorwerte, zurückgeben und somit steuernd oder regelnd auf einen industriellen Prozess oder eine industrielle Automatisierung einwirken. Auch ein Datenaustausch mit einem Bedien- und Beobachtungsgerät zur manuellen Überwachung und Beeinflussung einer industriellen Anordnung ist so möglich.

Die Erfindung betrifft somit auch ein Suchverfahren zur Ermittlung von Daten eines Automatisierungssystems, bei dem
- ein Schattenmodell, das unter Durchführung des vorgenannten erfindungsgemäßen Verfahrens erhalten wird oder wurde, bereitgestellt wird,
- unter Verwendung einer für Graphdatenbanken vorgesehen Abfragesprache, insbesondere unter Verwendung von SPARQL, eine Suchabfrage an das Schattenmodell gerichtet wird,
- ein die Parameter der Suchabfrage erfüllendes, Daten des Automatisierungssystems umfassendes Abfrageergebnis ausgegeben wird.

Die vorliegende Erfindung ermöglicht es mit anderen Worten, eine zweite Darstellung eines OPC UA Objektmodells zu halten, die diesem konsistent als "Schatten" nachgeführt wird. Das den "Schatten" bildende Datenmodell, das vorliegend auch als Schattenmodell bezeichnet wird, basiert dabei auf einer Graphdatenbank. Eine Graphdatenbank (oder graphenorientierte Datenbank) ist insbesondere eine Datenbank, die Graphen benutzt, um stark vernetzte Informationen darzustellen und abzuspeichern. Ein solcher Graph besteht aus Knoten und Kanten, den Verbindungen zwischen den Knoten. Beispiele für Graphdatenbanken sind RDF, OWL und Labeled-Property Graph (LPG). Die Graphdatenbank ermöglicht deklarative und komplexe Abfragen insbesondere durch über eine Query Engine ausgeführte Suchanweisungen.

Das Problem, dass OPC UA die Möglichkeit deklarativer Abfragen nicht bietet, wird durch das erfindungsgemäß vorgesehene, einen stets konsistenten "Abfrage-Repräsentanten" bildende Schattenmodell zuverlässig ausgeräumt. Dabei ist das Schattenmodell erfindungsgemäß für externe Applikationen ausschließlich lesend zugänglich (englisch: read only). Extern ist hier insbesondere als durch Nutzung offengelegter Schnittstellen zu verstehen. Änderungen, z.B. von Variablenwerten bzw. des Modells, werden allein über das bzw. in dem OPC UA Datenmodell, insbesondere über den bzw. in dem OPC Adressraum, vorgenommen und dann auf das Schattenmodell übertragen, mit anderen Worten in diesem nachgeführt. Es werden insbesondere keine von OPC UA Modell, also "dem Original" unabhängigen Änderungen in dem Schattenmodell vorgenommen. Das OPC UA Datenmodell, insbesondere der oder die OPC Server, ist bzw. sind erfindungsgemäß die primäre Datenquelle. Man kann auch sagen, dass der bzw. die OPC Server die "Single Source of Truth" sind. Abweichungen bzw. Inkonsistenzen zwischen den beiden Modellabbildungen, also dem OPC UA Datenmodell einerseits und dem den Abfrage-Repräsentanten bildenden Schattenmodell andererseits, werden so zuverlässig verhindert.

Der Vollständigkeit halber sei angemerkt, dass das Nachführen des Schattenmodells, also das Übertragen von in dem OPC UA Modell erfolgten Änderungen auf dieses, jeweils eine gewisse Zeit in Anspruch nehmen wird, in der dann vorübergehend keine Konsistenz vorliegt. Diese Latenzzeit wird zweckmäßigerweise so kurz wie möglich gehalten, was auch von den verfügbaren Ressourcen abhängen kann bzw. wird. Bevorzugt beträgt die Latenzzeit, insbesondere die Zeit, innerhalb der eine in dem OPC UA Datenmodell aufgetretene bzw. erfolgte Änderung im Schattenmodell erfolgreich nachgeführt wird bzw. wurde, eine Millisekunde oder weniger.

Rein beispielhaft für Änderungen seien solche gespeicherte Werte, aber auch Modelländerungen, Modellerweiterungen und Modellreduktionen genannt.

Dadurch, dass das Schattenmodell (innerhalb der Latenzzeit für die Nachführung zur Wiederherstellung der Konsistenz) stets ein aktuelles Abbild des OPC Modells anbietet, können beliebig komplexe Suchabfragen an das Schattenmodell gerichtet werden.

Zweckmäßiger Weise umfasst das Schattenmodell eine Abfragelogik, die deklarative Suchabfragen ermöglicht, an welche solche also gerichtet werden können. Auf dies Abfragen wird dann bevorzugt jeweils eine komplette Ergebnismenge ("Result Set") zurückgeliefert.

Unter deklarativen Suchabfragen sind insbesondere Suchabfragen zu verstehen, die im Gegensatz zu imperativen Suchen nicht den Algorithmus der Suche vorgeben, sondern ad hoc die gewünschte Ergebnismenge ("Result Set") beschreiben. Die imperative Logik des Suchens wird einer Suchmaschine ("Query Engine") überlassen.

Insbesondere für den Fall, dass es sich bei dem Schattenmodell um eine RDF-basiertes Modell handelt, ist die Abfragelogik bevorzugt durch eine SPARQL-Engine gegeben. Bei der Schnittstelle kann es sich dann insbesondere um einen SPARQL-Endpoint handeln oder die Schnittstelle umfasst einen solchen. SPARQL steht für "SPARQL Protocol And RDF Query Language". SPARQL ist eine graphbasierte Abfragesprache für Abfragen von Inhalten, die in Datenbanken zur Formulierung logischer Aussagen über beliebige Dinge genutzt werden kann.

Unter Daten eines Automatisierungssystems sind vorliegend sämtliche Daten zu verstehen, die im Zusammenhang mit einem solchen System stehen, insbesondere für ein solches System vorliegen und in einem solchen System anfallen, u.a. während des Betriebs. Es sei angemerkt, dass anstelle von Daten auch synonym von Informationen gesprochen werden kann und anstelle von einem Datenmodell synonym von einem Informationsmodell. Rein beispielhaft für Daten, mit anderen Worten Informationen, eines Automatisierungssystems seien Daten zu der Spezifikation des Systems bzw. von Komponenten, die Bestandteil des Systems bzw. mit diesem verbunden sind, und Betriebsparameter sowie Betriebswerte, die beispielsweise im regulären Betrieb des Automatisierungssystems insbesondere messtechnisch erfasst und/oder an das System übergeben werden, genannt. Die Daten können beispielswiese die Spezifikation einschließlich der Modellbezeichnungen eines Teils oder auch sämtlicher Komponenten des Automatisierungssystems umfassen. Auch können Messwerte wie die Temperatur, der Druck, die Geschwindigkeit etc. von Komponenten des Systems, z.B. Motoren, zu den Daten gehören, die im Betrieb gemessen werden. Wenn sich z.B. die messtechnisch überwachte Temperatur eines Motors des Automatisierungssystems ändert, würde die entsprechende Variable im OPC UA Datenmodell auf den neuen, geänderten Wert angepasst und das Schattenmodell würde aufgrund der Änderung bzw. in Reaktion auf die Änderung des OPC UA Modells entsprechend nachgeführt. Wird ein Motor eines ersten Typs gegen einen solchen eines zweiten Typs ausgetauscht, kann der bzw. können die zugehörigen Einträge im OPC UA Datenmodell angepasst werden und das Schattenmodell würde automatisch nachgeführt.

In weiterer bevorzugter Ausführungsform erfolgt insbesondere in Schritt S2 eine Transformation des OPC UA Datenmodells zum Erhalt des Schattenmodells.

Die Transformation des OPC UA Datenmodells kann umfassen bzw. dadurch erfolgen, dass der OPC Adressraum transformiert wird. Es kann eine Überführung von Knoten des OPC Metamodells in ein Graphdatenbank-Metamodell erfolgen, z.B. in ein RDF-Metamodell oder ein OWL-Metamodell oder ein Labeled-Property-Graphen-Metamodell.

Als ganz besonders vorteilhaft hat sich erwiesen, wenn eine Transformation des OPC UA Datenmodells in ein RDF-Triple basiertes Datenbankmodell vorgesehen ist. Beispiele einer solchen Transformation sind in der WO 2020/104019 A1 beschrieben und können im Rahmen der vorliegenden Erfindung zum Erhalt des Schattenmodells vorgesehen sein bzw. genutzt werden.

Auch kann vorgesehen sein, dass die Transformation des OPC UA Datenmodells zum Erhalt des Schattenmodells im Speicher des OPC Serverprozesses durchgeführt wird, beispielsweise durch Bereitstellen der Implementierung in einer Bibliothek anstelle eines eigenen Prozesses.

Insbesondere wird das Schattenmodell von dem OPC UA Server oder den OPC UA Servern als zweite Darstellung des von dem OPC UA Server oder den OPC UA Servern gehaltenen OPC UA Objektmodells gehalten.

Das automatische Nachführen des Schattenmodells kann prinzipiell auf verschiedene Weise erfolgen. In bevorzugter Ausgestaltung ist vorgesehen, dass die OPC Server Implementierung intern nach erfolgreicher Durchführung der Änderung im OPC UA Datenmodell nachgelagert die entsprechende Änderung im Schattenmodell nachführt.

Bevorzugt überprüft der OPC UA Stack, ob eine Änderung, etwa eine Wert- oder Modelländerung, valide ist. Der OPC UA Stack kann auch entscheiden, ob Werte geschrieben werden dürfen oder read-only sind, ob Wertebereiche eingehalten sind etc. Es wird bevorzugt erst, wenn der OPC UA Stack alles überprüft hat, die Änderung in das Schattenmodell überführt. Man kann auch sagen, der OPC UA Stack ist der "Gatekeeper".

Auch ist es möglich, dass in Schritt S3 das OPC UA Datenmodell auf Änderungen überwacht wird und jeweils in Reaktion auf die Erfassung einer insbesondere erfolgreichen Änderung des OPC UA Datenmodells das Schattenmodell entsprechend nachgeführt wird, um Konsistenz zu erzielen. Die Überwachung kann kontinuierlich oder mit vorgegebenen oder vorgebbaren, bevorzugt äquidistanten Zeitabständen wiederholend erfolgen.

Es können Notifizierungen über Änderungen, wie Wert- und Modelländerungen, angefordert werden, insbesondere vom OPC UA Datenmodell bzw. einem zugehörigen OPC UA Stack, und für jede Notifizierung bzw. entsprechende Änderung wird dann automatisch das entsprechende Update im Schattenmodell durchgeführt.

Die Bereitstellung des OPC UA Datenmodells in Schritt S1 umfasst zweckmäßiger Weise, dass wenigstens ein OPC UA Server gestartet, ein OPC Adressraum aufgebaut und Datenquellen, deren Daten in dem Adressraum zur Verfügung gestellt werden sollen, verbunden werden.

Es ist auch möglich, dass zusätzliche Daten über externe Dateien geladen werden, bevorzugt zusätzliche Typdefinitionen aus OPC Companion Specifications.

Ein weiterer Gegenstand der vorliegenden Erfindung ist ein Computerprogramm, das Programmcodemittel umfasst, die, wenn sie auf wenigstens einem Computer ausgeführt werden, den wenigstens einen Computer veranlassen, die Schritte des erfindungsgemäßen Verfahrens zur Bereitstellung von Daten und/oder des erfindungsgemäßen Suchverfahrens durchzuführen.

Die Erfindung betrifft auch ein computerlesbares Medium, das Instruktionen umfasst, die, wenn sie auf wenigstens einem Computer ausgeführt werden, den wenigstens einen Computer veranlassen, die Schritte des erfindungsgemäßen Verfahrens zur Bereitstellung von Daten und/oder des erfindungsgemäßen Suchverfahrens durchzuführen.

Bei dem computerlesbaren Medium kann es sich beispielsweise um eine CD-ROM oder DVD oder einen USB oder Flash Speicher handeln. Es sei angemerkt, dass unter einem computerlesbaren Medium nicht ausschließlich ein körperliches Medium zu verstehen sein soll, sondern ein solches beispielswiese auch in Form eines Datenstromes und/oder eines Signals, welches einen Datenstrom repräsentiert, vorliegen kann.

Schließlich betrifft die Erfindung eine Vorrichtung zur Datenverarbeitung, umfassend
- einen Prozessor, und
- eine Datenspeichervorrichtung, auf der computerausführbarer Programmcode gespeichert ist, der, wenn er von dem Prozessor ausgeführt wird, diesen veranlasst, die Schritte des erfindungsgemäßen Verfahrens zur Bereitstellung von Daten und/oder des erfindungsgemäßen Suchverfahrens durchzuführen.

Weitere Merkmale und Vorteile der vorliegenden Erfindung werden anhand der nachfolgenden Beschreibung erfindungsgemäßer Ausführungsformen unter Bezugnahme auf die beiliegende Zeichnung deutlich. Darin ist
- Figur 1: eine rein schematische Darstellung eines OPC UA Datenmodells und eines zugehörigen Schattenmodells; und
- Figur 2: eine rein schematische Darstellung zur Erfassung von Änderungen in dem OPC UA Datenmodell aus Figur 1 und dem Nachführen der Änderungen im zugehörigen Schattenmodell.

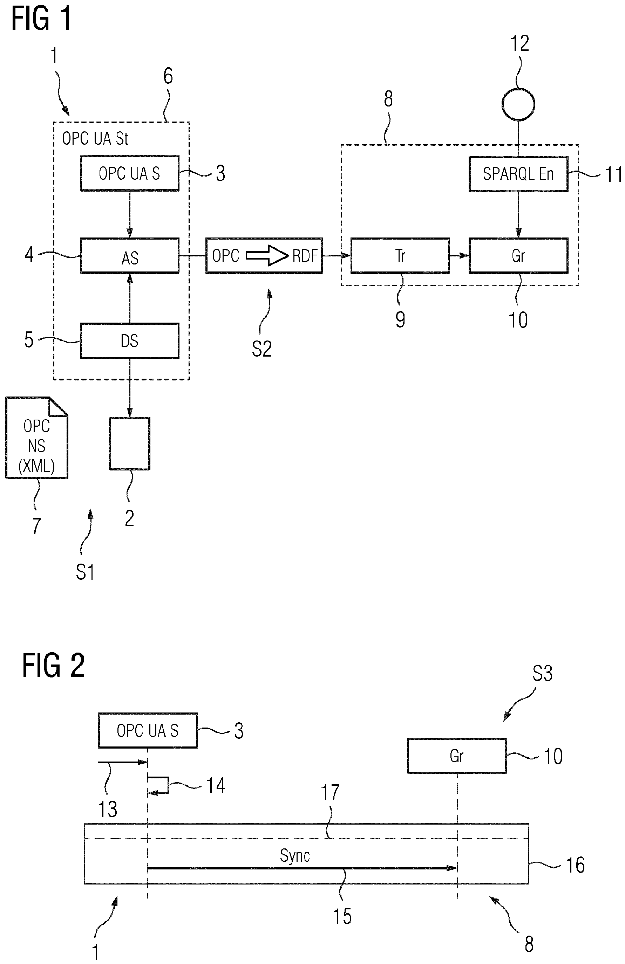

Die Figur 1 zeigt in stark vereinfachter Blockdarstellung ein OPC UA Datenmodell 1, welches die Daten eines industriellen Automatisierungssystems 2 umfasst. Von dem System 2 ist in der Figur symbolisch eine Steuerung gezeigt. Ebenfalls in der Figur schematisch jeweils durch Blockelemente dargestellt, sind ein OPC UA Server 3, ein OPC Adressraum 4, eine Datenquelle 5 und der OPC UA Stack 6 des Datenmodells 1. Dass die Daten von dem Automatisierungssystem 2 stammen ist in der Figur durch einen von der Quelle 5 auf das Automatisierungssystem 2 weisenden Pfeil angedeutet. Beispielhaft in Form eines Dokumentes ist ferner ein OPC Nodeset 7 dargestellt. Dieses folgt, wie üblich, dem XML-Format bzw. zeichnet sich durch dieses aus.

Im Folgenden wird ein Ausführungsbeispiel des erfindungsgemäßen Verfahrens zum Bereitstellen von Daten eines Automatisierungssystems 2 für Suchabfragen unter Bezugnahme auf die Figuren beschrieben.

In einem ersten Schritt S1 werden Daten des Automatisierungssystems 2 bereitgestellt. Vorliegend wird der OPC UA Server 3 gestartet und in hinlänglich vorbekannter Weise der OPC Adressraum 4 aufgebaut und alle Datenquellen 5, deren Daten in dem Adressraum 4 zur Verfügung gestellt werden sollen, werden verbunden. Weiterhin wurden zusätzliche Daten, falls nötig, über externe Dateien geladen, wobei hier rein beispielhaft weitere Typendefinitionen aus OPC Companion Specifications genannt sein. Es sei angemerkt, dass die Bereitstellung von Daten natürlich auch durch die Bereitstellung eines schon gestarteten OPC UA Servers 2, aufgebauten Adressraums 4 etc. erfolgen kann.

Unter Daten des Automatisierungssystems 2 sind sämtliche Daten zu verstehen, die im Zusammenhang mit einem solchen System stehen, insbesondere für ein solches System vorliegen und in einem solchen System anfallen können, u.a. während des Betriebs. Rein beispielhaft für Daten, mit anderen Worten Informationen, eines Automatisierungssystems 2 seien Daten zu der Spezifikation des Systems bzw. von Komponenten, die zu diesem gehören bzw. mit diesem verbunden sind, und Betriebsparameter sowie Betriebswerte, die beispielsweise im regulären Betrieb des Automatisierungssystems insbesondere messtechnisch erfasst oder an das System 2 übergeben werden, genannt. Die Daten können z.B. die Spezifikation einschließlich der Modellbezeichnungen eines Teils oder auch sämtlicher Komponenten des Automatisierungssystems 2 sowie laufend erfasste Messwerte wie die Temperatur, den Druck, die Geschwindigkeit etc. von Komponenten des Systems. Das OPC UA Datenmodell 1 kann sämtliche oder auch nur einen Teil der Daten eines gegeben Automatisierungssystems umfassen.

In einem Schritt S2 wird für das OPC UA Datenmodell 1 ein zusätzliches, synchronisiertes Schattenmodell 8 bereitgestellt, das den OPC Adressraum 4 repräsentiert. Das Schattenmodell 8 basiert auf einer Graphdatenbank, hier einer RDF-Graphdatenbank bzw. ist durch eine solche gegeben.

Bei dem dargestellten Ausführungsbeispiel erfolgt die Bereitstellung des Schattenmodells 8 durch geeignete Transformation des OPC UA Datenmodells 1. Konkret erfolgt eine Transformation des OPC Adressraums 4, wobei Nodes vom OPC Metamodell in das RDF-Metamodell überführt werden. Das RDF-Modell ist in hinlänglich vorbekannter Weise ein Datenmodell, das auf gerichteten Graphen basiert, wobei Daten in RDF üblicher Weise Aussagen über Ressourcen in Form von Tripeln sind. Die Menge der Tripel bildet einen (mathematischen) Graphen. Ein Tripel ist in ebenfalls vorbekannter Weise eine Aussage, die aus Subjekt, Prädikat und Objekt besteht. In der Figur 1 sind zu dem RDF-Schattenmodell 8 beispielhaft - jeweils durch Blockelemente - Tripel 9, Graph 10 und eine Abfragelogik ("Query Engine") in Form einer SPARQL-Engine 11 dargestellt.

Die Transformation OPC zu RDF erfolgt bei dem hier beschriebenen Ausführungsbeispiel, wie in der WO 2020/104019 A1 beschrieben, wobei in diesem Dokument insbesondere auf die detaillierte Beschreibung des Transformationsprozesses auf den Seiten 7 bis 18 zu verweisen ist.

Das Resultat der Transformation ist ein Graph 10, der in der Graphdatenbank 8 gehalten wird.

Es sei betont, dass die Nutzung von RDF rein beispielhaft zu verstehen ist und auch andere Graphdatenbanken, z.B. OWL- sowie Labeled-Property-Graphdatenbanken, für das Schattenmodell 8 geeignet sind. Bei OWL beispielsweise würde eine Überführung der Nodes vom OPC-Metamodell in das OWL-Metamodell erfolgen.

Die Transformation des OPC UA Datenmodells 1 zum Erhalt des Schattenmodells 8 wird bevorzugt im Speicher des OPC Serverprozesses durchgeführt, was den Vorteil hat, dass die Geschwindigkeit ("Performance") der Transformation wesentlich erhöht wird. Auch bestehen mehr Möglichkeiten der Modell-Manipulation, wenn die Graphdatenbank 8 programmatisch ergänzt oder verändert werden kann, ohne über öffentliche oder gar standardisierte (SPARQL-)Schnittstellen mit beschränkter Funktionalität (Fokus eher auf Abfragen) gehen zu müssen.

Das Schattenmodell 8 wird ferner von dem OPC UA Server 3 als zweite Darstellung des von dem Server gehaltenen OPC UA Objektmodell gehalten. Es handelt sich bei dem Schattenmodell 8 um eine In-Memory RDF-Datenbank.

Für den Fall, dass Änderungen in dem OPC UA Datenmodell 1 auftreten, wird das Schattenmodell 8 automatisch entsprechend nachgeführt, so dass es bei Änderungen des OPC UA Datenmodells 1 mit diesem konsistent bleibt (Schritt S3, vgl. Figur 2) .

Für externe Applikationen ist das Schattenmodell 8 jedoch ausschließlich lesend zugänglich. Externe Applikationen können somit keine Änderungen in dem Schattenmodell 8 durchführen, sondern es ist für diese "Read Only". In der Figur 1 ist - wiederum rein schematisch - ein "Read Only" SPARQL-Endpoint 12 dargestellt, über den Benutzer deklarative Suchabfragen an die das Schattenmodell 8 bildende RDF-Datenbank richten, jedoch keine Änderungen in diesem vornehmen können.

Das automatische Nachführen von in dem OPC UA Datenmodell 1 auftretenden Änderungen im Schattenmodell 8 ist stark vereinfacht in der Figur 2 dargestellt. Diese zeigt auf der linken Seite das OPC UA Datenmodell 1, wobei von diesem nur der OPC UA Server 3 erneut dargestellt ist. Auf der rechten Seite ist das Schattenmodell 8 bzw. von diesem der Graph 10 schematisch durch ein Blockelement gezeigt. Es ist ferner beispielhaft ein Änderungsereignis durch einen mit dem Bezugszeichen 13 versehenen Pfeil dargestellt. Es versteht sich, dass mehrere Änderungen in dem OPC UA Datenmodell 1 auftreten können und in der Regel auftreten werden, so dass das eine in der Figur gezeigte Ereignis 13 beispielhaft für die jeweilige Änderung zu verstehen ist. Eine Änderung kann etwa vorliegen, weil sich eine messtechnisch überwachte Größe des Automatisierungssystems, z.B. eine Temperatur im Antrieb eines Roboters der Automatisierungsanlage 2, geändert hat. Der zugehörige, im OPC UA Datenmodell 1 gespeicherte Wert wird dann entsprechend angepasst und es erfolgt eine Prozessänderung ("Process change") im OPC UA Node set 7. Diese Prozessänderung ist in der Figur 2 durch einen mit dem Bezugszeichen 14 versehenen Pfeil angedeutet.

In Reaktion auf die (jeweiligen) Änderung 14 des OPC UA Datenmodells 1 wird das durch die In-Memory RDF-Datenbank gegebene Schattenmodell 8 automatisch nachgeführt. Konkret wird die Graphdatenbank 8 jeweils entsprechend synchronisiert, indem die (jeweilige) Änderung auf diese angewendet wird. Dies erfolgt bei dem dargestellten Ausführungsbeispiel, indem die OPC Server Implementierung intern nach erfolgreicher Durchführung der (jeweiligen) Änderung im OPC UA Datenmodell 1 nachgelagert die entsprechende Änderung im Schattenmodell 8 nachführt.

In Figur 2 ist die Synchronisation durch einen mit dem Bezugszeichen 15 versehenen Pfeil dargestellt. Es ist ferner ein Loop 16, also eine Schleife, implementiert, so dass die Synchronisation jeweils für alle erfolgreichen Änderungen (in der Figur durch eine mit 17 bezeichnete gestrichelte Linie angedeutet) erfolgt.

Bevorzugt überprüft der OPC UA Stack 6, ob eine Änderung, etwa eine Wert- oder Modelländerung, valide ist. Der OPC UA Stack 6 kann auch entscheiden, ob Werte geschrieben werden dürfen oder read-only sind, ob Wertebereiche eingehalten sind etc. Es wird bevorzugt erst, wenn der OPC UA Stack 6 alles überprüft hat, die Änderung in das Schattenmodell überführt. Man kann auch sagen, der OPC UA Stack 6 ist der "Gatekeeper".

Dadurch, dass das Schattenmodell 8 (innerhalb der Latenzzeit für die Nachführung zur Wiederherstellung der Konsistenz) stets ein aktuelles Abbild des OPC Modells 1 anbietet, können von Benutzern beliebig komplexe Suchabfragen, die Daten des OPC UA Modells 1 betreffen, an das Schattenmodell 8 gerichtet werden, das sozusagen einen stets aktuellen "Abfrage-Repräsentanten" bildet. Die Problematik, dass OPC UA solche Abfragen nicht ermöglicht, wird zuverlässig ausgeräumt. Da das Schattenmodell 8 für externe Applikationen "Read Only" ist, ist das OPC UA Datenmodell 1 dabei stets die "Single Source of Truth" und Konsistenz ist gewahrt.

Ein Ausführungsbeispiel des erfindungsgemäßen Suchverfahrens umfasst, dass nach der vorstehend beschriebenen Bereitstellung des Schattenmodells 8 durch eine externe Anwendung unter Verwendung von SPARQL eine deklarative Suchabfrage an dieses gerichtet und eine die Parameter der Suchabfrage erfüllendes, Daten des Automatisierungssystems umfassendes Abfrageergebnis, insbesondere ein "Result Set" ausgegeben wird.

Dieses Abfrageergebnis ermöglicht es dann der externen Anwendung (insbesondere einem OPC UA Client), auf die im OPC UA Datenmodell gehaltenen Daten, beispielsweise Prozessdaten einer Automatisierungskomponente (OPC UA Server, z.B. PLC), direkt zuzugreifen bzw. diese mittels eines OPC UA Datenzugriffs abzurufen.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Verfahren zum Bereitstellen von Daten eines Automatisierungssystems (2) für Suchabfragen und Abrufen der Daten durch eine externe Anwendung, bei dem
S1) ein die Daten des Automatisierungssystems (2) umfassendes OPC UA Datenmodell (1) bereitgestellt wird,
S2) ein durch Transformation des OPC UA Datenmodells (1) erhaltenes und den Adressraum (4) des OPC UA Datenmodells (1) repräsentierendes zusätzliches Datenmodell, Schattenmodell (8), bereitgestellt wird, wobei das Schattenmodell (8) auf einer Graphdatenbank, insbesondere einer RDF- oder OWL- oder Labeled-Property-Graphdatenbank, basiert oder durch eine solche gegeben ist, und wobei auf das Schattenmodell (8) von externen Applikationen nur lesend zugegriffen werden kann,
S3) das Schattenmodell (8) im Falle von in dem OPC UA Datenmodell (1) durchgeführten Änderungen automatisch nachgeführt wird, so dass das Schattenmodell (8) bei Änderungen des OPC UA Datenmodells (1) mit dem OPC UA Datenmodell (1) konsistent bleibt,
S4) Zugriff auf das Schattenmodell durch die externe Anwendung, und
S5) Verwendung, durch die externe Anwendung, des zugegriffenen Schattenmodells (8) für eine Abfrage der Daten mittels OPC UA aus dem Automatisierungssystem (2).

2. Verfahren nach Anspruch 1,
**dadurch gekennzeichnet, dass**
das Schattenmodell (8) eine deklarative Suchabfragen ermöglichende Abfragelogik, insbesondere eine SPARQL-Engine (11), umfasst.

3. Verfahren nach Anspruch 1 oder 2,
**dadurch gekennzeichnet, dass**
die Transformation des OPC UA Datenmodells (1) zum Erhalt des Schattenmodells (8) umfasst oder dadurch erfolgt, dass der OPC Adressraum (4) transformiert wird, bevorzugt, wobei die Transformation des OPC Adressraumes (4) eine Überführung von Knoten des OPC Metamodells in ein Graphdatenbank-Metamodell umfasst oder dadurch erfolgt.

4. Verfahren nach einem der vorhergehenden Ansprüche,
**dadurch gekennzeichnet, dass**
die Transformation des OPC UA Datenmodells (1) zum Erhalt des Schattenmodells (8) im Speicher des OPC Serverprozesses durchgeführt wird.

5. Verfahren nach einem der vorhergehenden Ansprüche,
**dadurch gekennzeichnet, dass**
das Schattenmodell (8) von dem OPC UA Server (3) oder den OPC UA Servern (3) als zweite Darstellung des von dem OPC UA Server (3) oder den OPC UA Servern (3) gehaltenen OPC UA Objektmodells gehalten wird.

6. Verfahren nach einem der vorhergehenden Ansprüche, **dadurch gekennzeichnet, dass**
dass in Schritt S3 das OPC UA Datenmodell (1) auf Änderungen überwacht wird und jeweils in Reaktion auf die Erfassung einer insbesondere erfolgreichen Änderung des OPC UA Datenmodells (1) das Schattenmodell (8) entsprechend nachgeführt wird, um Konsistenz zu erzielen.

7. Verfahren nach Anspruch 6,
**dadurch gekennzeichnet, dass**
die Überwachung kontinuierlich oder mit vorgegebenen oder vorgebbaren, bevorzugt äquidistanten Zeitabständen wiederholend erfolgt.

8. Verfahren nach einem der vorhergehenden Ansprüche, **dadurch gekennzeichnet, dass**
die Bereitstellung des OPC UA Datenmodells (1) in Schritt S1 umfasst, dass wenigstens ein OPC UA Server (3) gestartet, ein OPC Adressraum (4) aufgebaut und Datenquellen, deren Daten in dem Adressraum (4) zur Verfügung gestellt werden sollen, verbunden werden.

9. Verfahren nach Anspruch 8,
**dadurch gekennzeichnet, dass**
zusätzliche Daten über externe Dateien geladen werden, bevorzugt zusätzliche Typdefinitionen aus OPC Companion Specifications.

10. Suchverfahren zur Ermittlung von Daten eines Automatisierungssystems (2) und zum Zugriff auf die Daten durch eine externe Anwendung, bei dem
- ein Schattenmodell (8) bereitgestellt wird, das unter Durchführung des Verfahrens nach einem der vorhergehenden Ansprüche erhalten wird oder wurde,
- unter Verwendung einer für Graphdatenbanken vorgesehen Abfragesprache, insbesondere unter Verwendung von SPARQL, eine Suchabfrage an das Schattenmodell (8) gerichtet wird,
- ein die Parameter der Suchabfrage erfüllendes, Daten des Automatisierungssystems (2) umfassendes Abfrageergebnis ausgegeben wird.

11. Computerprogramm, umfassend Befehle, die, wenn sie auf wenigstens einem Computer ausgeführt werden, den wenigstens einen Computer veranlassen, die Schritte des Verfahrens nach einem der Ansprüche 1 bis 10 durchzuführen.

12. Computerlesbares Medium, umfassend Befehle, die, wenn sie auf wenigstens einem Computer ausgeführt werden, den wenigstens einen Computer veranlassen, die Schritte des Verfahrens nach einem der Ansprüche 1 bis 10 durchzuführen.

13. Vorrichtung zur Datenverarbeitung, umfassend
- einen Prozessor, und
- eine Datenspeichervorrichtung, auf der computerausführbarer Programmcode gespeichert ist, der, wenn er von dem Prozessor ausgeführt wird, diesen veranlasst, die Schritte des Verfahrens nach einem der Ansprüche 1 bis 10 durchzuführen.
